# FASCICULE DE BREVET EUROPEEN

(11) **EP 0 793 791 B1**
(45) Date de publication et mention de la délivrance du brevet: **24.03.1999**
(21) Numéro de dépôt: 95936929.9
(22) Date de dépôt: 01.12.1995
(51) Int. Cl.: F24D 10/00

(54) **APPAREILLAGE MODULAIRE POUR LA DISTRIBUTION D'EAU CHAUDE ET LE CHAUFFAGE D'UN IMMEUBLE**
MODULARES GERÄT FÜR DIE HEIZWASSERVERTEILUNG UND GEBÄUDEHEIZUNG
MODULAR APPARATUS FOR DISTRIBUTING HOT WATER AND HEATING A BUILDING

(30) Priorité: 02.12.1994 CH 3654/94
(43) Date de publication de la demande: 10.09.1997
(73) Titulaire: Morier-Genoud, Michel, 1009 Pully (CH)
(72) Inventeur: Morier-Genoud, Michel, 1009 Pully (CH)
(74) Mandataire: Ganguillet, Cyril
(86) Numéro de dépôt international: CH9500286
(87) Numéro de publication internationale: WO9617210

(56) Documents cités:
- EP-A- 0 543 769
- DE-A- 3 132 562
- FR-A- 2 531 189

## Description

La présente invention concerne un appareillage modulaire pour la distribution d'eau chaude et le chauffage d'un immeuble.

Il a déjà été proposé des installations de chauffage et de fourniture d'eau chaude utilisant l'eau chaude sanitaire comme fluide caloporteur. En particulier, la demande de brevet européen publiée sous no 0543769 décrit un ensemble de chauffage et de distribution d'eau chaude destiné à venir s'insérer dans une boucle de circulation d'eau chaude sanitaire, un tel ensemble étant prévu pour chaque utilisateur, en vue de permettre un décompte individuel des frais. Cet ensemble comporte une conduite d'amenée d'eau chaude munie d'un compteur volumétrique à son entrée, suivie d'une bifurcation dont l'une des branches dessert les postes de distribution d'eau chaude et dont l'autre branche dessert un échangeur de chaleur. Compte tenu de la position du compteur volumétrique à l'entrée du circuit d'amenée d'eau, cette installation ne permet pas de faire une distinction entre l'eau chaude consommée et l'eau chaude utilisée pour le chauffage. Elle n'est donc pas conforme aux normes actuelles en matière de comptage et d'économie d'énergie. D'autre part, du fait de sa conception, lorsque l'utilisateur interrompt le chauffage (vanne 9), il interrompt tout le circuit de la boucle d'eau chaude.

Le but de la présente invention est de proposer un appareillage modulaire permettant de remédier aux inconvénients des appareillages et installations proposés jusqu'ici et qui permette de respecter tous les critères des normes actuelles en matière de comptage et d'économie d'énergie.

A cet effet, l'invention concerne un appareillage modulaire pour la distribution d'eau chaude et le chauffage d'un immeuble tel que défini à la revendication 1. Elle concerne également une installation de chauffage telle que définie à la revendication 9.

La description qui suit, donnée à titre d'exemple, se réfère aux dessins annexés sur lesquels:
- la figure 1 est une vue schématique en élévation d'un premier exemple d'appareil selon l'invention, relié à une installation de chauffage,
- la figure 2 est une vue partielle de profil de l'appareil de la figure 1,
- la figure 3 est une vue de détail de l'appareil de la figure 1, illustrant le circuit d'eau chaude desservant l'échangeur de chaleur,
- la figure 4 est une vue de détail de l'appareil de la figure 1, illustrant le circuit d'alimentation du collecteur de chauffage aller,
- la figure 5 est une vue de détail de l'appareil de la figure 1, illustrant le circuit de retour du collecteur de chauffage retour.
- la figure 6 est une vue schématique en élévation d'un second exemple d'appareil selon l'invention,
- la figure 7 est une vue partielle de profil de l'appareil de la figure 6,
- la figure 8 est un exemple schématique d'installation de chauffage à laquelle peut être connecté l'appareil de la figure 6,
- la figure 9 est une vue de détail de l'appareil de la figure 6, illustrant le circuit d'eau chaude desservant l'échangeur de chaleur,
- la figure 10 est une vue de détail de l'appareil de la figure 6, illustrant le circuit d'alimentation du collecteur de chauffage aller, et
- la figure 11 est une vue de détail de l'appareil de la figure 6, illustrant le circuit de retour du collecteur de chauffage retour.

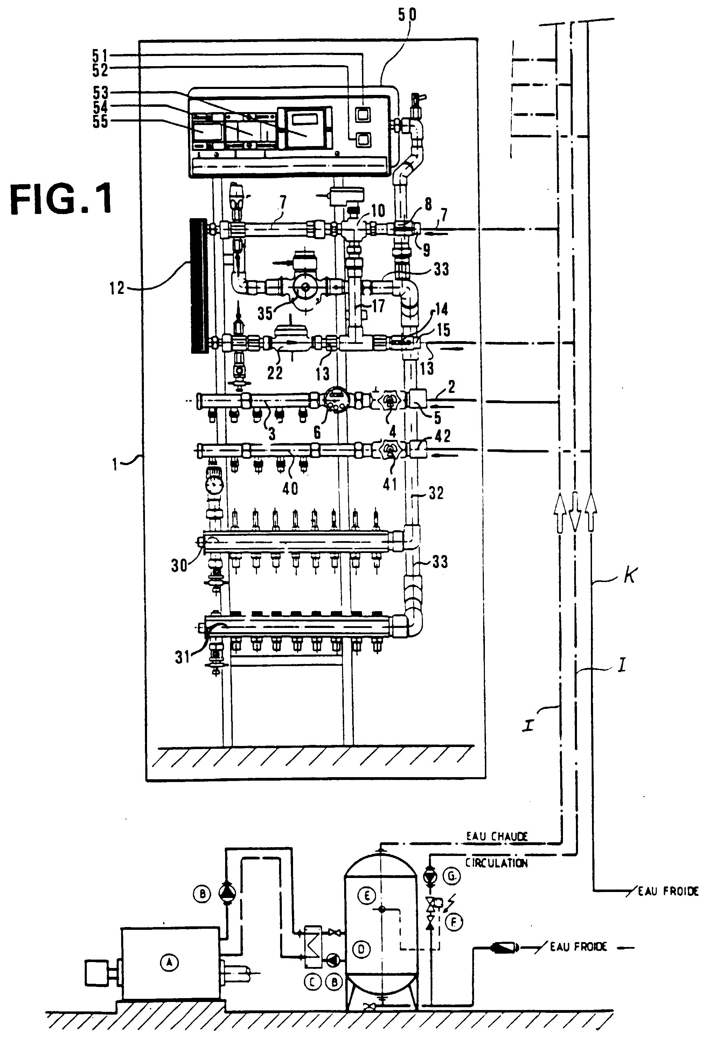

L'installation de chauffage représentée à la figure 1 comporte une chaudière A, par exemple une chaudière à mazout, à gaz atmosphérique ou à gaz pulsé, raccordée par l'intermédiaire de pompes de charge B et d'un échangeur à plaques C à un chauffe-eau D muni de thermostats E. L'installation comporte une boucle de circulation d'eau chaude I raccordée à la chaudière et le long de laquelle peuvent être raccordés une pluralité d'appareillages modulaires 1 tels que décrits ci-après.

Un seul appareillage modulaire 1 est représenté à la figure 1. Il comporte deux conduites d'alimentation en eau chaude distincte 2 et 7.

La première conduite d'alimentation d'eau chaude 2 est destinée à la distribution d'eau chaude à l'utilisateur. A cet effet, elle est raccordée à l'une de ses extrémités à un collecteur de distribution d'eau chaude 3, son autre extrémité comportant un robinet d'arrêt 4 et des organes 5 destinés à son raccordement à la boucle de circulation d'eau chaude I. Un compteur d'eau volumétrique 6 est monté sur la conduite 2.

En ce qui concerne le chauffage, l'appareillage est conçu de façon à prélever l'énergie nécessaire au chauffage sur la température de l'eau chaude sanitaire. A cet effet, la seconde conduite d'alimentation 7 est raccordée à l'une de ses extrémités à un échangeur de chaleur 12, son autre extrémité comportant un robinet d'arrêt 8 et des organes 9 destinés à son raccordement à la boucle de circulation d'eau chaude I. Une conduite de retour 13 est raccordée à l'une de ses extrémités à l'échangeur de chaleur 12. Cette conduite de retour est destinée au retour à la boucle de circulation I de l'eau chaude introduite dans l'échangeur 12 par la conduite d'alimentation 7. A cet effet, l'extrémité de la conduite de retour 13 comporte un robinet d'arrêt 14 combiné avec un dispositif de réglage du débit et des organes 15 destinés à son raccordement à la boucle de circulation d'eau chaude I.

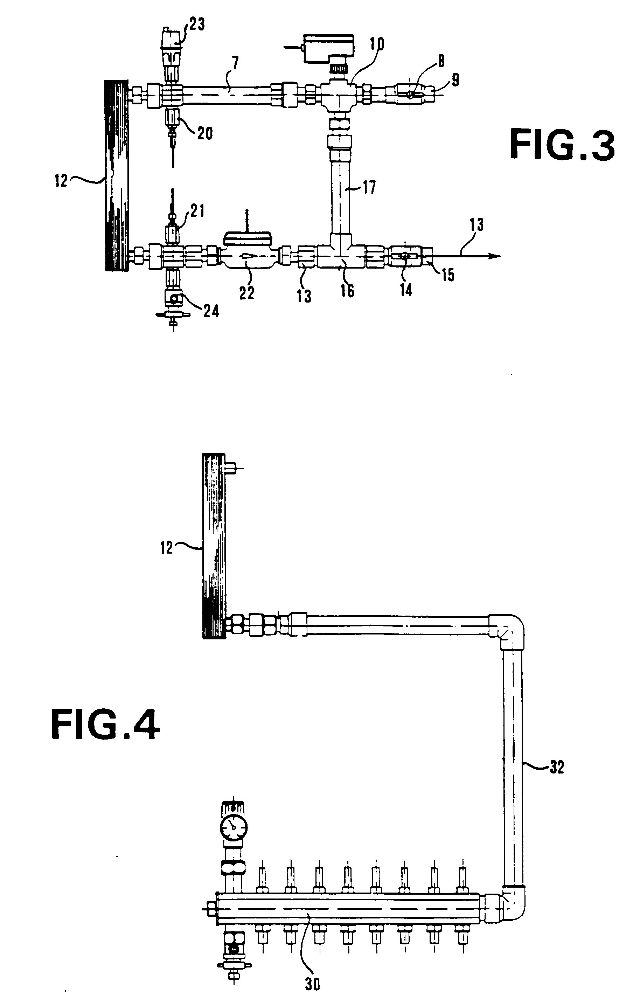

Le circuit constitué par la conduite d'alimentation 7 et la conduite de retour 13 desservant l'échangeur de chaleur 12 est représenté de façon isolée à la figure 3. Une vanne motorisée à trois voies 10 pilotée par un thermostat d'ambiance est montée sur la conduite d'alimentation 7, à proximité du robinet 8 de façon à permettre la dérivation d'une partie ou de tout le flux d'eau chaude entrant dans la conduite 7 dans une conduite de dérivation 17, reliée à son autre extrémité à la conduite de retour 13 par un branchement à trois voies 16. Cet agencement permet de ne pas interrompre le circuit d'eau chaude, quel que soit le réglage choisi pour l'échangeur de chaleur 12.

Le circuit 7, 13 desservant l'échangeur de chaleur 12 comporte en outre un dispositif permettant de mesurer la quantité d'énergie prélevée sur l'eau chaude lors de son passage dans l'échangeur 12, muni d'un compteur de calories. Ce dispositif de mesure peut par exemple comprendre une première sonde de température 20 montée sur la conduite d'alimentation 7, à proximité de son raccord avec l'échangeur, et une deuxième sonde de température 21 montée sur la conduite de retour, à proximité de son raccord avec l'échangeur. Ces deux sondes permettent de déterminer la différence de température de l'eau chaude entre son entrée dans l'échangeur et sa sortie de l'échangeur de chaleur 12. Le dispositif peut être complété par un compteur d'eau volumétrique 22 monté sur la conduite de retour 13. Un purgeur automatique 23 est monté sur la conduite 7 en regard de la sonde 20 et un robinet de vidange 24 est monté sur la conduite 13 en regard de la sonde 21.

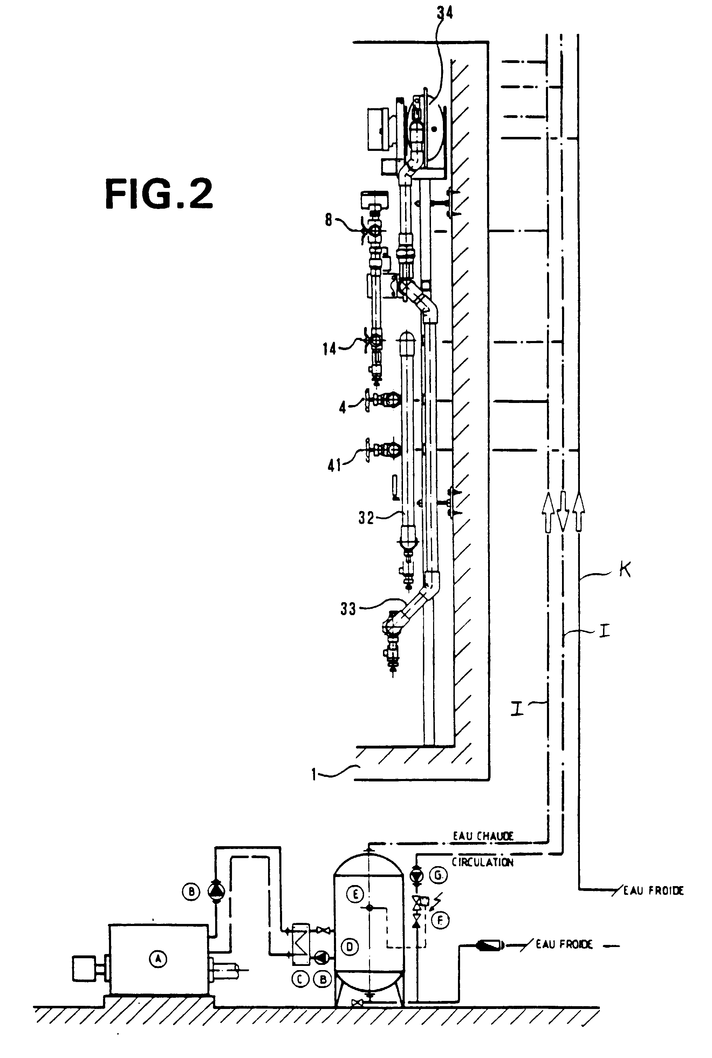

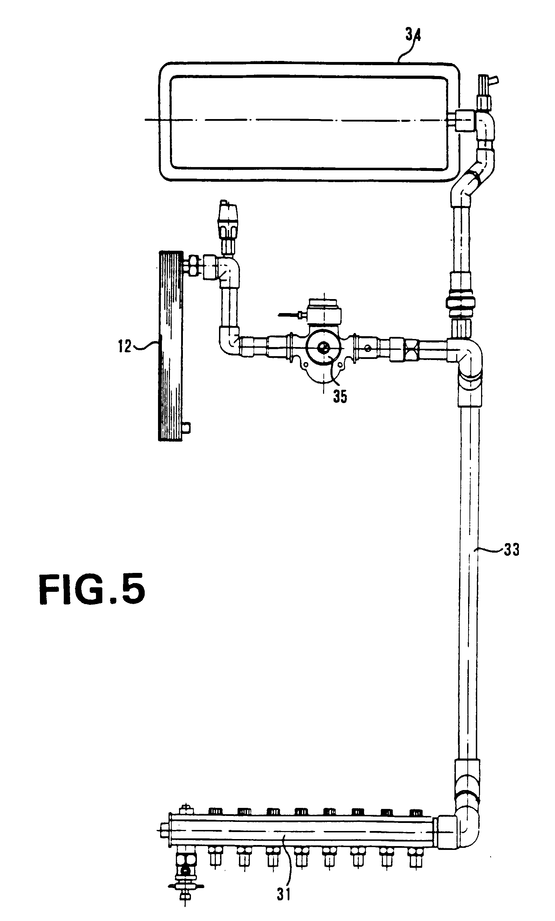

Comme représenté sur les figures 1 et 2, l'appareillage peut être complété par un circuit secondaire de circulation de fluide de chauffage également représenté de façon isolée sur les figures 4 et 5. Ce circuit secondaire comporte deux collecteurs 30, 31 de distribution du fluide de chauffage, l'un 30 pour les conduites de chauffage de départ et l'autre 31 pour les conduites de chauffage de retour, ces deux collecteurs étant raccordé à l'échangeur 12 par l'intermédiaire respectivement d'une conduite d'alimentation 33 et d'une conduite de retour 32. Ce circuit secondaire peut être muni d'un vase d'expansion 34. Au départ des collecteurs 30, 31, il peut être procédé à l'installation d'une distribution horizontale (non représentée sur les dessins, puisqu'elle ne fait pas partie de l'appareillage) sans radiateur, du type chauffage de sol basse température ou à une distribution horizontale par radiateurs du type monotube ou bitube étoile. Dans les deux cas, le réglage du chauffage peut se faire par une régulation automatique, soit avec une horloge pour le chauffage par radiateur, soit sans horloge pour le chauffage de sol, par le biais d'un régulateur d'ambiance agissant sur la vanne motorisée à trois voies 10 représentée sur les figures 1 et 3, un circulateur individuel 35 étant placé sur le circuit secondaire. Cet agencement permet une circulation continue et, de ce fait, une grande précision dans le maintien de la température ambiante.

Comme représenté à la figure 1, l'appareillage peut comporter en outre un collecteur de distribution d'eau froide 40, muni à son extrémité d'un robinet d'arrêt 41 et d'organes 42 pour son raccord à une conduite d'alimentation générale en eau froide II. Un compteur volumétrique peut être disposé à l'entrée du collecteur 40.

Comme représenté à la figure 1, l'appareillage peut comporter encore un tableau électrique de commande 50 comportant tous les éléments nécessaires à son bon fonctionnement, notamment un fusible de commande 51, un interrupteur de marche et arrêt 52 de la pompe, un totalisateur de comptage 53, un régulateur 54, un transformateur 55, etc., l'ensemble étant précâblé.

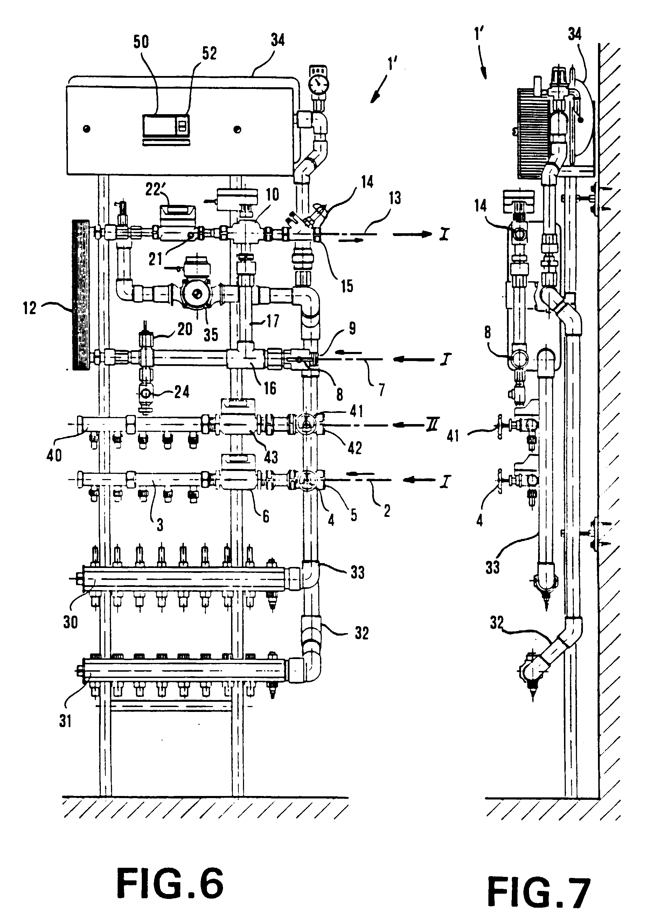

Un second exemple d'appareillage modulaire 1' est représenté sur les figures 6 et 7. Cet appareillage comporte pour l'essentiel les mêmes composants que l'appareillage représenté aux figures 1 et 2, ces composants étant repérés sur les figures avec les mêmes références numériques que celles indiquées sur les figures 1 et 2. On remarquera toutefois que dans ce second exemple, afin d'améliorer la répartition des fluides, le sens de circulation de l'eau chaude est inversé par rapport à celui de l'appareil de la figure 1. De même, les positions relatives du collecteur de distribution d'eau chaude 3 et du collecteur de distribution d'eau froide 40 l'un par rapport à l'autre sont interchangées par rapport à l'appareil de la figure 1.

D'autre part, dans ce second exemple, la sonde de température 21 est intégrée à un compteur de calories 22', qui remplace le compteur d'eau volumétrique 22 représenté sur l'appareillage de la figure 1. Enfin, le robinet d'arrêt 14 de l'appareil de la figure 6 est combiné avec un dispositif de réglage du débit. On remarquera en outre un compteur volumétrique 43 disposé à l'entrée du collecteur 40.

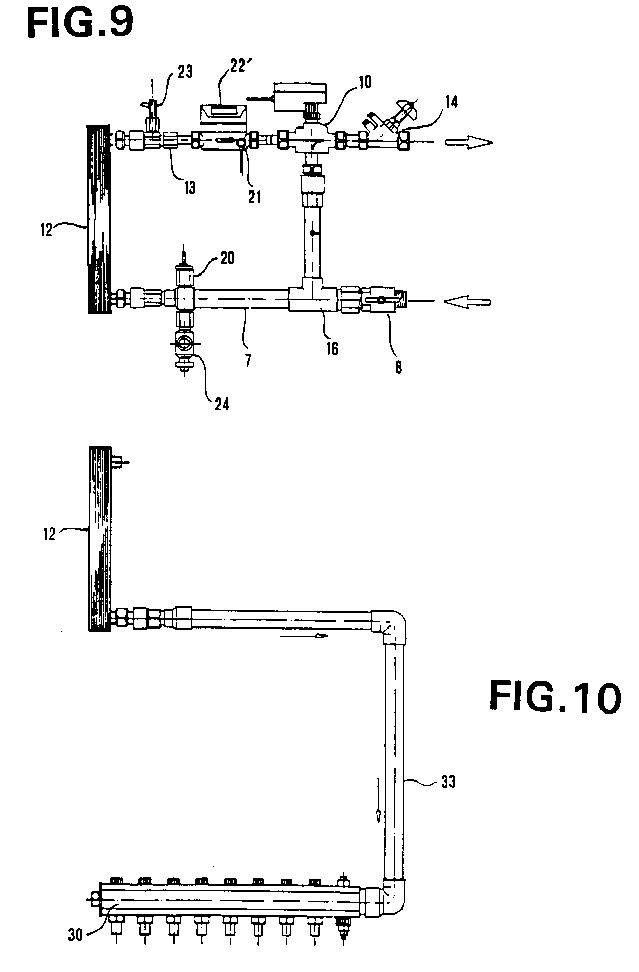

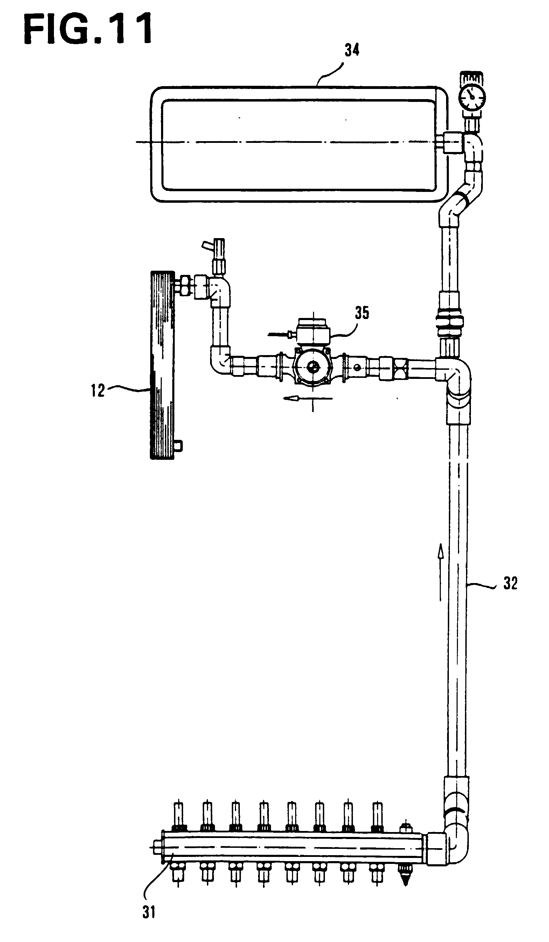

Des vues de détail de l'appareil de la figure 6 sont représentées aux figures 9, 10 et 11.

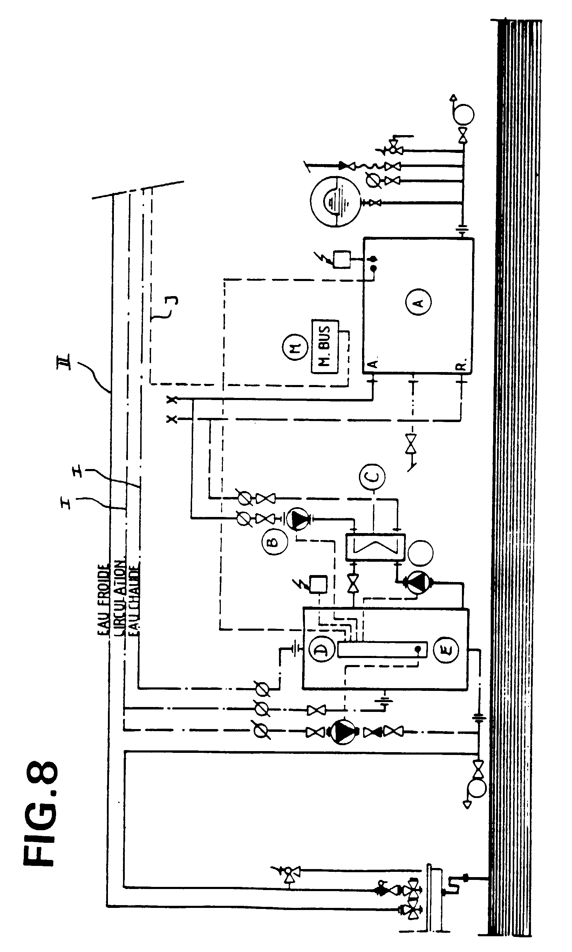

L'installation de chauffage représentée à la figure 8 comporte un tableau électrique de commandes 50 comportant tous les éléments nécessaires à son bon fonctionnement et notamment un interrupteur de marche et arrêt 52 de la pompe, un régulateur et un transformateur, l'ensemble étant précâblé.

Tel que décrit ci-dessus, l'appareillage modulaire selon l'invention peut être réalisé de façon à pouvoir être facilement transporté et mis en place, par exemple avec des dimensions extérieures de l'ordre de 170 x 60 x 25 centimètres. Il permet de respecter tous les critères élaborés par le législateur en matière de comptage et d'économie d'énergie. Dans un immeuble, un tel appareillage peut être placé dans chaque appartement ou local indépendant qui doit faire l'objet d'un décompte individuel de chauffage, de consommation d'eau chaude et, le cas échéant, d'eau froide. Il sera de préférence construit avec des matériaux non corrodables et respectant les normes d'hygiène en matière de distribution d'eau sanitaire.

Compte tenu des robinets d'arrêts dont il est muni, l'appareillage modulaire selon l'invention permet la mise hors service complète ou partielle de la distribution d'eau chaude et/ou froide de l'appartement ou local qu'il dessert, facilitant ainsi les problèmes d'entretien ou d'intervention sur la robinetterie.

La conception de réglage individuel de cet appareillage modulaire permet une adaptation automatique et constante de la température des locaux, en fonction de la charge thermique variable (ensoleillement ou charges internes).

La possibilité de réglage permet également, en cas d'inoccupation des locaux, de fonctionner en régime économique, en maintenant toutefois une température minimum, par exemple de 15 °C. En outre, comme représenté à la figure 8, les compteurs d'eau froide 43, d'eau chaude 6 et de chauffage 22 peuvent être reliés par une ligne bus J de façon à transférer les données à une centrale M placée à un endroit quelconque de l'immeuble, loin de l'espace privatif auquel l'appareillage modulaire est destiné.

En plus des avantages déjà mentionnés, l'appareillage selon l'invention présente notamment les avantages suivants:
- diminution du nombre des conduites calo-porteuses, avec possibilité de limiter la température par exemple à 55 °C, avec pour résultat une économie sensible d'énergie,
- les problèmes de coordination de distribution chauffages/eau sanitaire sont supprimés,
- l'utilisation de matériaux non corrodables, entraîne une économie considérable des frais d'entretien et une garantie de longévité des installations,
- l'installation de chaufferie peut être réduite à une chaudière et un producteur d'eau chaude,
- diminution importante des conduites à isoler,
- limitation des percements et gaines techniques
- meilleures possibilités d'isoler phoniquement les locaux.

L'appareillage selon l'invention peut être inséré dans toutes les constructions nouvelles, qu'il s'agisse par exemple d'habitations en propriété par étage ou d'habitations collectives en location et dans les locaux à usage commerciaux, ainsi que dans le cas de rénovations d'anciennes constructions.

## Revendications

1. Appareillage modulaire pour la distribution d'eau chaude et le chauffage d'un immeuble, destiné à être raccordé à une boucle de circulation d'eau chaude sanitaire (I), comportant au moins une première conduite d'alimentation d'eau chaude (2) dont l'une des extrémités est destinée à être raccordée à ladite boucle (I) et dont l'autre extrémité est connectée à au moins un point de distribution d'eau chaude, un compteur d'eau volumétrique (6) étant monté sur ladite première conduite, au moins une deuxième conduite d'alimentation d'eau chaude (7) connectée à un échangeur de chaleur (12) et au moins une conduite de retour (13) connectée audit échangeur (12) pour le retour de l'eau chaude à la boucle de circulation (I) après passage dans l'échangeur, et un dispositif de mesure (22) de la quantité d'énergie prélevée sur l'eau chaude lors de son passage dans l'échangeur.

2. Appareillage selon la revendication 1, caractérisé en ce que ledit dispositif de mesure comporte une première sonde de température (20) montée sur la deuxième conduite d'alimentation (7) à proximité du raccord avec l'échangeur (12), une seconde sonde de température (21) étant montée sur la conduite de retour (13) à proximité de son raccord avec l'échangeur (12) et un compteur d'eau volumétrique (22) monté sur la conduite de retour (13).

3. Appareillage selon la revendication 1, caractérisé en ce que ledit dispositif de mesure comporte une première sonde de température (20) montée sur la deuxième conduite d'alimentation (7) à proximité du raccord avec l'échangeur (12), une seconde sonde de température (21) étant incorporée à la conduite de retour (13) par le biais d'un compteur de calories (22').

4. Appareillage selon l'une des revendications précédentes, caractérisé en ce qu'il comporte une conduite de dérivation (17) reliant la deuxième conduite d'alimentation (7) à la conduite de retour (13).

5. Appareillage selon l'une des revendications précédentes, caractérisé en ce que la première conduite d'alimentation d'eau chaude (2) est munie d'un dispositif d'arrêt (4).

6. Appareillage selon l'une des revendications précédentes, caractérisé en ce que la deuxième conduite d'alimentation d'eau chaude (7) et/ou la conduite retour est/sont munies d'un dispositif d'arrêt (8; 14).

7. Appareillage selon l'une des revendications précédentes, caractérisé en ce qu'il comprend en outre un collecteur de distribution d'eau froide (40) destiné à être raccordé à une conduite d'alimentation d'eau froide (J).

8. Appareillage selon la revendication 7, caractérisé en ce que le collecteur de distribution d'eau froide (40) comporte un compteur d'eau volumétrique (43).

9. Appareillage selon l'une des revendications 7 ou 8, caractérisé en ce que le collecteur de distribution d'eau froide (40) est muni d'un dispositif d'arrêt (41).

10. Appareillage selon l'une des revendications précédentes, caractérisé en ce qu'il comporte un circuit secondaire de circulation de fluide de chauffage (30, 31, 32, 33).

11. Installation de circulation d'eau chaude sanitaire pour la distribution d'eau chaude et le chauffage d'un immeuble, caractérisé en ce qu'elle comporte un appareillage modulaire selon l'une des revendications 1 à 10 pour chaque utilisateur.

## Patentansprüche

1. Modulares Gerät für die Warmwasserverteilung und die Heizung eines Gebäudes für den Anschluß an eine Zirkulationsschleife für warmes Brauchwasser (I), mit mindestens einer ersten Warmwasser-Versorgungsleitung (2), bei der das eine der Enden für den Anschluß an die Schleife (I) bestimmt ist und das andere Ende mit mindestens einem Warmwasser-Verteilungspunkt verbunden ist; einem volumetrischen Wasserzähler (6), der an der ersten Leitung montiert ist; mindestens einer zweiten Warmwasser-Versorgungsleitung (7), die mit einem Wärmetauscher (12) verbunden ist; mindestens einer Rückleitung (13), die mit dem Tauscher (12) für den Rückfluß des Warmwassers in die Zirkulationsschleife (I) nach dem Durchtritt durch den Tauscher verbunden ist; und einer Meßvorrichtung (22) für die Energiemenge, die von dem Warmwasser bei seinem Durchtritt durch den Tauscher entnommen wird.

2. Gerät nach Anspruch 1, dadurch gekennzeichnet, daß die Meßvorrichtung eine erste Temperatursonde (20), die an der zweiten Versorgungsleitung (7) in der Nähe des Anschlusses an dem Tauscher (12) montiert ist, eine zweite Temperatursonde (21), die an der Rückleitung (13) in der Nähe ihres Anschlusses an dem Tauscher (12) montiert ist, und einen volumetrischen Wasserzähler (22), der an der Rückleitung (13) montiert ist, aufweist.

3. Gerät nach Anspruch 1, dadurch gekennzeichnet, daß die Meßvorrichtung eine erste Temperatursonde (20) aufweist, die an der zweiten Versorgungsleitung (7) in der Nähe des Anschlusses an den Tauscher (12) montiert ist, wobei eine zweite Temperatursonde (21) in der Rückleitung (13) über einen Wärmezähler (22') eingebaut ist.

4. Gerät nach einem der vorhergehenden Ansprüche, dadurch gekennzeichnet, daß es eine Umgehungsleitung (17) aufweist, welche die zweite Versorgungsleitung (7) mit der Rückleitung (13) verbindet.

5. Gerät nach einem der vorhergehenden Ansprüche, dadurch gekennzeichnet, daß die erste Warmwasser-Versorgungsleitung (2) mit einer Absperrvorrichtung (4) ausgestattet ist.

6. Gerät nach einem der vorhergehenden Ansprüche, dadurch gekennzeichnet, daß die zweite Warmwasser-Versorgungsleitung (7) und/oder die Rückleitung mit einer Absperrvorrichtung (8; 14) ausgestattet ist/sind.

7. Gerät nach einem der vorhergehenden Ansprüche, dadurch gekennzeichnet, daß es außerdem einen Kaltwasserverteiler (40) aufweist, der für den Anschluß an eine Kaltwasser-Versorgungsleitung (J) bestimmt ist.

8. Gerät nach Anspruch 7, dadurch gekennzeichnet, daß der Kaltwasser-Verteiler (40) einen volumetrischen Wasserzähler (43) aufweist.

9. Gerät nach einem der Ansprüche 7 oder 8, dadurch gekennzeichnet, daß der Kaltwasser-Verteiler (40) mit einer Absperrvorrichtung (41) ausgestattet ist.

10. Gerät nach einem der vorhergehenden Ansprüche, dadurch gekennzeichnet, daß es einen sekundären Heizfluid-Zirkulationskreis (30, 31, 32, 33) aufweist.

11. Anlage zur Zirkulation von warmem Brauchwasser für die Warmwasserverteilung und Heizung eines Gebäudes, dadurch gekennzeichnet, daß sie ein modulares Gerät nach einem der Ansprüche 1 bis 10 für jeden Nutzer aufweist.

## Claims

1. Modular apparatus for distributing hot water and heating a building, intended to be connected to a domestic hot water circulation circuit (I), comprising at least one first hot water feed pipe (2), one end of which is intended to be connected to the said circuit (I), and the other end of which is connected to at least one hot water distribution point, a volumetric water meter (6) being fitted on the said first pipe, at least one second hot water feed pipe (7) connected to a heat exchanger (12), and at least one return pipe (13) connected to the said exchanger (12) for returning the hot water to the circulation circuit (I) after passing through the exchanger, and a measuring device (22) for measuring the quantity of energy drawn from the hot water while passing through the exchanger.

2. Apparatus according to claim 1, characterised in that the said measuring device comprises a first temperature sensor (20) mounted on the second feed pipe (7) close to the connection to the exchanger (12), a second temperature sensor (21) being mounted on the return pipe (13) close to its connection to the exchanger (12), and a volumetric water counter (22) mounted on the return pipe (13).

3. Apparatus according to claim 1, characterised in that the said measuring device comprises a first temperature sensor (20) mounted on the second feed pipe (7) close to the connection with the exchanger (12), a second temperature sensor (21) being incorporated into the return pipe (13) by means of a calorie counter (22').

4. Apparatus according to one of the preceding claims, characterised in that it comprises a by-pass pipe (17) connecting the second feed pipe (7) to the return pipe (13).

5. Apparatus according to one of the preceding claims, characterised in that the first hot water feed pipe (2) is fitted with a shutoff device (4).

6. Apparatus according to one of the preceding claims, characterised in that the second hot water feed pipe (7) and/or the return pipe is/are fitted with a shutoff device (8; 14).

7. Apparatus according to one of the preceding claims, characterised in that it further comprises a cold water distribution manifold (40) intended to be connected to one cold water feed pipe (J).

8. Apparatus according to claim 7, characterised in that the cold water distribution manifold (40) comprises a volumetric water meter (43).

9. Apparatus according to one of claims 7 or 8, characterised in that the cold water distribution manifold (40) is fitted with a shutoff device (41).

10. Apparatus according to one of the preceding claims, characterised in that it comprises a secondary heating water circulation circuit (30, 31, 32, 33).

11. Domestic hot water circulation installation for the distribution of hot water and heating of a building, characterised in that it comprises a modular apparatus according to one of claims 1 to 10 for each user.
